# EUROPÄISCHE PATENTANMELDUNG

(11) **EP 0 583 221 A1**
(43) Veröffentlichungstag der Anmeldung: **16.02.1994**
(21) Anmeldenummer: 93810501.2
(22) Anmeldetag: 14.07.1993
(51) Int. Cl.: B62K 3/10, B62K 19/10

(54) **Fahrradrahmen**

(30) Priorität: 13.08.1992 CH 2535/92
(71) Anmelder: ALUSUISSE-LONZA SERVICES AG, CH-8034 Zürich (CH)
(72) Erfinder: Widrig, Jakob, CH-8400 Winterthur (CH)

(57) **Zusammenfassung**

Fahrradrahmen aus Aluminium oder Aluminiumlegierungen, enthaltend ein Lenkkopfrohr (1), ein Rahmenrohr (2), ein Sitzrohr (3) und ein Tretlagergehäuse (4), wobei das Rahmenrohr (2) ein Rahmenrohrpaar darstellt und das Sitzrohr (3) zwischen dem gespreizten Rahmenrohrpaar befindlich ist. Wenigstens eines der Fahrradrahmenteile, ausgewählt aus dem Lenkkopfrohr (1), dem Rahmenrohrpaar (2), dem Tretlagergehäuse (4) und dem Sitzrohr (3), sind aus stranggepressten Profilen. Die Fahrradrahmenteile werden bevorzugt durch partiellen Formschluss und Kleben miteinander verbunden.

## Beschreibung

Vorliegende Erfindung betrifft einen Fahrradrahmen aus Aluminium oder Aluminiumlegierungen enthaltend ein Lenkkopfrohr, ein Rahmenrohr, ein Sitzrohr und ein Tretlagergehäuse.

Für Fahrradrahmen wurden schon verschiedene Formen beschrieben, beispielsweise der klassische Fünfeck-, Trapez- oder Diamant-Rahmen. Auch bekannt geworden sind Einrohrrahmen, beispielsweise als Klapp- oder Zerlegrahmen oder z.B. für Kinderräder (Siegfried Rauch, Fritz Winkler, "Fahrrad Technik", Bielefelder Verlagsanstalt KG, Bielefeld, 1980). In der Praxis (Zeitschrift "bike", 7/92, Seiten 23, 25, 30, Verlag Delius Klasing & Co, Bielefeld, München) haben auch im Zusammenhang mit der Markterschliessung durch sogenannte "Mountain-Bikes" oder "All-Terrain-Bikes" Konstruktionen Eingang gefunden, die einen Einrohrrahmen aus Aluminium aufweisen. Der Einrohrrahmen hat entweder ein überdimensioniertes Rohrprofil oder ein Kastenprofil, die sich jeweils am Sitzrohr abstützen. Vom Sitzrohr aus führen Hinterrohre oder Hinterstreben zu den hinteren Ausfallenden, welche die Hinterradachse aufnehmen.

Die Einrohrrahmen weisen in einer Aluminiumkonstruktion den Nachteil auf, dass umfangreiche Schweissarbeiten notwendig werden um die Rahmenteile zu verbinden und die geforderte Rahmenstabilität zu erreichen, ferner ist eine Vielzahl von Einzelteilen notwendig, die hergestellt, gelagert, für den Zusammenbau bereit gestellt und schliesslich zusammengefügt werden müssen.

Vorliegende Erfindung hat die Aufgabe die Nachteile bisheriger Rahmen und der Rahmenfertigung zu vermeiden und es wird ein Fahrradrahmen beschrieben, der aus wenigen kostengünstig herstellbaren Einzelteilen auf einfache Weise gefügt werden kann und der eine hohe Stabilität aufweist.

Erfindungsgemäss wird das dadurch erreicht, dass das Rahmenrohr ein Rahmenrohrpaar ist und dass das Lenkkopfrohr und/oder das Rahmenrohrpaar und/oder das Tretlagergehäuse und/oder das Sitzrohr stranggepresste Profile sind.

Gemäss vorliegender Erfindung kann wenigstens ein Element, ausgewählt aus den Teilen von Rahmenrohrpaar, Lenkkopfrohr, Tretlagergehäuse und Sitzrohr aus stranggepressten Profilen sein.

In zweckmässigen Ausführungsformen sind wenigstens das Rahmenrohrpaar und das Sitzrohr stranggepresste Profile oder das Rahmenrohrpaar, das Sitzrohr und das Lenkkopfrohr sind stranggepresste Profile oder das Rahmenrohrpaar, das Sitzrohr, das Tretlagergehäuse und das Lenkkopfrohr sind stranggepresste Profile.

Das Lenkkopfrohr stellt zweckmässig ein Rohrprofil mit zwei radial abstehenden, in spitzem Winkel zueinander stehenden, angeformten Fahnen dar. In anderer zweckmässiger Ausführungsform ist das Lenkkopforhr ein Rohrprofil, mit zwei tangential am Rohr angeformten Fahnen, die im wesentlichen parallel zueinander stehen.

Das Lenkkopfrohr weist in der Regel einen Lenkwinkel von 65 bis 90°, vorzugsweise von 69 bis 73° und insbesondere von 70 bis 72° auf.

Das Rahmenrohrpaar stellt zweckmässig ein symmetrisches Kastenprofilpaar dar, wobei jedes Kastenprofil in der Regel einen rechteckigen Querschnitt oder im wesentlichen rechteckigen Querschnitt aufweist. Die Wahl eines symmetrischen Kastenprofilpaares ist vorteilhaft, da aus einem Profilmuster beide Rohre des Paares hergestellt werden können. Insbesondere erstreckt sich das Rahmenrohrpaar vom Lenkkopf bis zu den hinteren Ausfallenden.

Das Sitzrohr kann ein Rohrprofil mit einem angeformten Kastenprofil sein oder kann ein Kastenprofil mit eingeformtem Sitzrohr sein.

Der Aufbau des erfindungsgemässen Fahrradrahmens kann durch Einstecken des Rahmenrohrpaares in die angeformten Fahnen des Lenkkopfrohres erfolgen. Dabei wird jeweils ein Rahmenrohr in Kastenprofilform und entsprechend mit wenigstens einem Hohlraum über eine der Fahnen bis an das Lenkkopfrohr geschoben. Die am Lenkkopfrohr durch Strangpressen angeformten Fahnen können durch eine spanabhebende Bearbeitung soweit in ihrer Höhe gegenüber dem eigentlichen Lenkkopfrohr reduziert sein, dass die Fahnen in ihrer Höhe dem Hohlraum im Kastenprofil weitgehend entsprechen.

Das Rahmenrohrpaar weist eine gegenseitige Spreizung, ausgehend vom Lenkkopfrohr auf, wobei die Spreizung so gross ist, dass die am hinteren Ende der Rahmenrohre angeordneten Ausfallenden die Hinterradachse aufnehmen können.

Das Sitzrohr kann zwischen den gespreizten Rahmenrohren angeordnet und über das angeformte Kastenprofil mit dem Rahmenrohrpaar in eine trennfeste Verbindung gebracht werden.

Das Sitzrohr kann zwischen die Rahmenrohre eingeschoben werden, wobei z.B. die Aufspreizung der Rahmenrohre und insbesondere trennfeste Verbindungen nachfolgend beschriebener Art von Kastenprofil des Sitzrohres und Rahmenrohrflanken die geforderte trennfeste Verbindung liefert.

Zwischen den gespreizten Rahmenrohre wird das Sitzrohr angeordnet. Das Sitzrohr weist in der Regel einen Sitzwinkel von z.B. 60 bis 90° und vorzugsweise in einem Sitzwinkel von 65 bis 75° und insbesondere von 72 bis 74° auf.

Die Seitenflächen des Kastenprofiles des Sitzrohres können in Berührung und/oder Eingriff mit den innenseitigen oder aussenseitigen Seitenflächen der beiden Rahmenrohre stehen.

Die Seitenflächen des Kastenprofiles des Sitzrohres können in Berührung mit den inneren Seitenflächen des Rahmenrohrpaares stehen und an den Berührungsflächen trennfest miteinander verbunden sein.

Der erfindungsgemässe Fahrradrahmen kann auch ein Rahmenrohrpaar aufweisen, das auf den Schmalseiten an den inneren Ecken längslaufende Nuten aufweist und das Kastenprofil des Sitzrohres kann an den Seitenwänden des Kastenprofiles längslaufende Ausnehmungen und an gleicher Stelle an den Stirnwänden des Kastenprofiles Ausnehmungen aufweisen, die in ihrer Form und Höhe dem innenrandseitigen Querschnitt der Rahmenrohre entsprechen, und die Ränder der längslaufenden Ausnehmungen bilden Schienen oder Auskragungen, welche in die längslaufenden Nuten der Rahmenrohre greifen und das Sitzrohr mit dem Rahmenrohrpaar verbinden.

Das am Sitzrohr angeformte Kastenprofil kann auch stirnseits je zwei im wesentlichen dem Querschnitt der Rahmenrohre entsprechende Ausnehmungen aufweisen, durch welche die Rahmenrohre, links und rechts am Sitzrohr vorbei durchgeschoben werden können. Zweckmässig berühren sich die Aussenflanken der Rahmenrohre und die Innenseiten der Seitenfläche des Kastenprofils. Durch Kleben, Schweissen, Schrauben oder Nieten kann eine trennfeste Verbindung zwischen Rahmenrohrpaar und Sitzrohr erreicht werden. Das Kleben wird bevorzugt.

Insbesondere können die Stirnflächen des Kastenprofiles Ausnehmungen aufweisen, die zweckmässig dem Querschnitt des Rahmenrohrprofils entsprechen und wobei die Ausnehmungen durch die Seitenflächen des Kastenprofiles begrenzt sind. Die Rahmenrohre können dann durch die Ausnehmungen durchgestossen werden und die innenseitigen Seitenflächen des Kastenprofiles und die aussenseitigen Seitenflächen jeden Rahmenrohres stehen in flächenförmiger Berührung zueinander. An den Berührungsflächen kann eine trennfeste Verbindung erzeugt werden.

In einer weiteren Ausführungsform können an den Seitenwänden im wesentlichen horizontal, resp. in flachem Winkel entsprechend der Neigung des Rahmenrohrpaares, über die ganze Breite der Seitenwände verlaufende Winkelstücke angeformt sein, welche in die Nuten der Rahmenrohre eingreifen.

Das Kastenprofil des Sitzrohres kann durch spanabhebende Bearbeitung in seinen Ausdehnungen so vermindert werden, dass die zur Stabilität erforderlichen Materialmengen zurückbleiben und die Funktionalität erhöht und das Gewicht reduziert wird. Das Kastenprofil kann am oberen Ende des Sitzrohres bis auf das Sitzrohr entfernt werden und auf einer Höhe kann das Kastenprofil nach schräg unten auf die volle Form ausweiten. Unterhalb des Durch- oder Eingriffes des Rahmenrohrpaares kann das Kastenprofil wieder nach hinten unten eingengen. Am unteren Ende des Sitzrohres kann das Tretlagergehäuse befestigt werden.

Das Tretlagergehäuse kann aus einem stranggepressten Rohrprofil mit angeformten Kastenprofil bestehen, wobei das Kastenprofil Verstärkungsrippen aufweisen kann. Das Rohrprofil dient zur Aufnahme des Tretlagers. Vorteilhaft ist das Kastenprofil des Tretlagergehäuses so geformt, dass Berührungsstellen mit dem Kastenprofil des Sitzrohres und/oder das eigentliche Rohrteil des Sitzrohres in das Tretlagergehäuse eingeschoben werden kann. Eine Befestigung des Tretlagergehäuses am Sitzrohr erfolgt dann an oder über diese Berührungs- oder Einschubstellen, beispielsweise durch die unten genannten Befestigungsmittel.

Die trennfeste Verbindung des Lenkkopfrohres über die davon angeformten Fahnen mit dem Rahmenrohrpaar kann durch Schweissen, Kleben, Stauchen, Aufschrumpfen oder eine Kombination von diesen Verfahren erfolgen. Die Fahnen und/oder die Innenseite der Rahmenrohre können Rillen, Kerben, Waffelmuster oder dergleichen aufweisen. Beim Kleben können sich an jeden Stellen Klebstoffdepots bilden, welche die Haftung der Teile untereinander erhöhen. Eine mechanische Befestigung hoher Belastbarkeit wird beispielsweise erreicht, wenn die Fahnen eine sägezahnartige Riffelung aufweisen oder keilförmig verlaufen und die Rahmenrohre gegebenenfalls unter Verformung, wie Ausweitung, aufgepresst werden. Dieses Verfahren kann durch Klebstoffanwendung unterstützt werden. Es können, allein oder in Kombination mit den oben beschriebenen Befestigungsarten, durch Stauchungen, wie zum Beispiel punkt- oder streifenförmige Eindrückungen, die Teile miteinander trennfest verbunden werden.

Eine trennfeste Verbindung durch Schweissen und/oder Schrauben oder Nieten ist auch möglich. Auch hier sind Kombinationen mit obengenannten Befestigungslösungen möglich.

Bevorzugt werden Lenkkopfrohr und das Rahmenrohrpaar durch Kleben miteinander verbunden.

Die durch eine spanabhebende Bearbeitung gebildeten Ausnehmungen am Kastenprofil des Sitzrohres oder daran angeformte Winkelstücke können in die Nuten, welche in die Rahmenrohre eingeformt oder angeformt sind, eingreifen und können eine formschlüssige Verbindung erzeugen.

Die Verbindung zwischen Rahmenrohrpaar und Sitzrohr kann durch Kleben, Stauchen, insbesondere lokales Stauchen, Einbiegen, Schweissen, Schrauben oder Nieten trennfest ausgestaltet werden. Das Kleben wird dabei bevorzugt. Die Methoden zum trennfesten Verbinden können auch kombiniert werden. Bevorzugt ist die formschlüssige Verbindung von Rahmenrohrpaar durch eine der oben beschriebenen Ausgestaltungsformen der Teile und gleichzeitiges Verkleben der Teile.

Werden die Teile verklebt, können beispielsweise Einkomponenten-, Zweikomponenten-Kleber, wie Epoxid- oder Urethankleber, Kontaktkleber oder Cyanidkleber, sowohl kalt-, wie warmhärtend, zur Ausbildung von kälte- und wärmebeständigen hochfesten Verbindungen verwendet werden.

Das Rahmenrohrpaar kann auch zur Aufnahme von Befestigungsteilen, Anschlägen und Führungsteilen dienen. Befestigungsteile können Laschen oder Ösen für Schutzbleche, Beleuchtungsvorrichtungsteile, wie Dynamo und Lichter, Gepäckträger, Schutzbleche, Luftpumpe, Taschen usw. sein, ferner Nocken zur Aufnahme der Hinterradbremse, insbesondere der Kipphebel von Kipphebel-(Cantilever-)Bremsen. Führungsteile und Anschläge sind zum Verlegen der Brems- und Übersetzungskabelzüge von Bedeutung.

Alle diese Teile können als Laschen ausgestaltet sein, jeweils für eine oder auch mehrere der genannten Aufgaben. Die Laschen können Rippen aufweisen und durch Überschieben der Laschen über ein Rahmenrohr, wobei die Rippen in die Nuten des Rahmenrohres eingreifen, formschlüssig und gegebenenfalls durch weiteres trennfestes Verbinden am jeweiligen Rahmenrohr befestigt werden.

Zum trennfesten Verbinden können die Laschen, Ösen, Nocken, Führungs- und Anbauteile auch angeklebt, angeschweisst, angeschraubt und/oder angenietet werden.

Das Rahmenrohrpaar enthält an seinem rückwärtigen Ende die hinteren Ausfallenden an denen über die Hinterachse das ganze Hinterrad lösbar befestigt wird. Das rechte hintere Ausfallende kann schliesslich ein Auge zur Aufnahme eines Wechsels aufweisen. Die Ausfallenden können Fahnen aufweisen, die in das Kastenprofil des jeweiligen Rahmenrohres einschiebbar sind. Die trennfeste Verbindung kann dann durch die genannten Mittel erfolgen. Eine stumpfe Verbindung oder eine Verbindung über Muffen ist ebenfalls möglich.

Die Teile des erfindungsgemässen Fahrradrahmens, d.h. insbesondere das Lenkkopfrohr, das Rahmenrohrpaar und das Sitzrohr sind aus Aluminium oder Aluminiumlegierungen hergestellt. Bevorzugt sind Aluminium und seine Legierungen aus den Serien 3000, 6000 und 7000. Besonders bevorzugt sind Aluminiumlegierungstypen AlMgSi 0,7 (Serie 6106) oder AlMgSi 0,7 (Serie 6005).

Teile des Fahrradrahmens können aus faserverstärkten Kunststoffen (z.B. mit Aramid-, Glas- oder Carbonfasern verstärkte Kunststoffe, wie Epoxidharze) hergestellt werden.

Der ganze erfindungsgemässe Fahrradrahmen und insbesondere mechanisch stark beanspruchte Teile oder Teilbereiche des Fahrradrahmens können mit aushärtbaren Kunststoffen oder mit faserverstärkten aushärtbaren Kunststoffen umgeben und insbesondere mit den Aluminiumoberflächen trennfest verbunden sein und derart vollflächige oder lokale Verstärkungen bilden.

Der erfindungsgemässe Fahrradrahmen oder Teile davon können lackiert und /oder durch anodisieren an der Oberfläche behandelt werden.

Die nachfolgenden Figuren 1 bis 6 illustrieren beispielhaft die Erfindung weiter.

Figur 1 zeigt eine Ansicht des erfindungsgemässen Fahrradrahmens.

Figur 2 zeigt eine Draufsicht auf den erfidungsgemässen Fahrradrahmen.

Figuren 3a bis d zeigen Draufsichten auf Lenkkopfrohrprofile in verschiedenen Ausführungsformen.

Figur 3e zeigt die Seitenansicht eines Lenkkopfrohres.

Figuren 4a bis c zeigen Querschnitte durch Rahmenrohrpaare.

Figuren 5a und b zeigen Draufsichten auf verschiedene Sitzrohre.

Figuren 5c zeigt eine Seitenansicht, Figur 5d eine Vorderansicht eines Sitzrohres.

Figur 6 zeigt die Seitenansicht des Tretlagergehäuses.

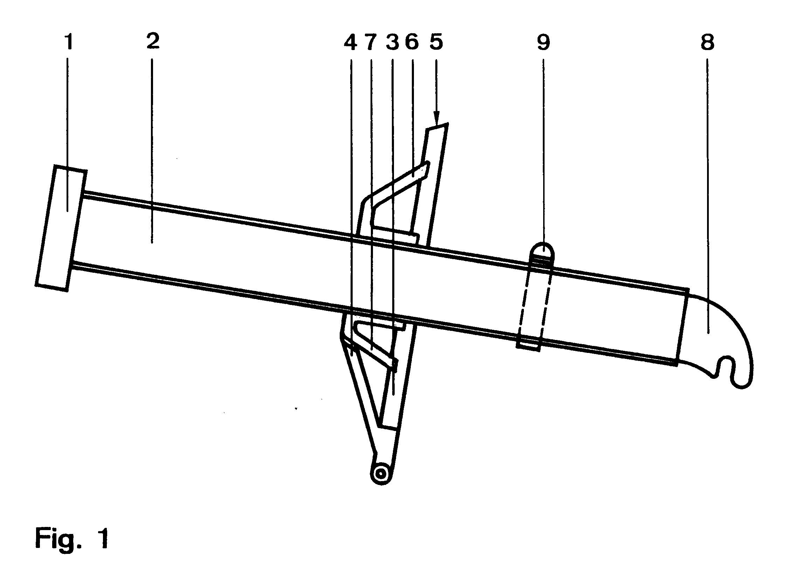

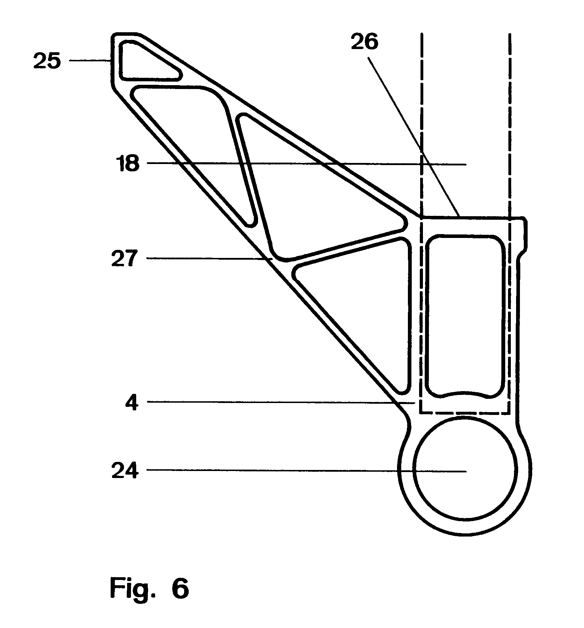

In Figur 1 ist das Lenkrohr 1 bündig mit dem Rahmenrohrpaar 2 verbunden. Das Rahmenrohrpaar 2 ist gespreizt und in der Spreizung ist das Sitzrohr 3 eingepasst. Das Tretlagergehäuse 4 ist ein Strangpressprofil, das in Figur 6 in Seitenansicht gezeigt wird. Am oberen Ende 5 des Sitzrohres 3 kann die Sattelstütze mit dem daran befestigten Sattel eingeschoben und durch eine Sattlrohrklemme (nicht abgebildet) befestigt werden. Das Sitzrohr 3 ist ein Strangpressprofil und zur Gewichteinsparung und zum Gewinn von Funktionalität sind Teile der kastenförmigen Anformung durch spanabhebende Bearbeitung entfernt worden. Es resultieren nach schräg vorne laufende strebenförmige Kastenteile 6, da die Seitenflächen mit Ausnehmungen versehen worden sind. Aus gleichen Gründen ist die kastenförmige Anformung unterhalb des Rahmenrohrpaares ebenfalls spanabhebend bearbeitet worden und bildet die Verstrebung 7. Hintere Ausfallenden 8 zur Aufnahme der Hinterachse sind mit dem Rahmenrohr verbunden. An Laschen befestigt sind die Aufnahmesockel 9 für Kipphebelbremsen eingezeichnet.

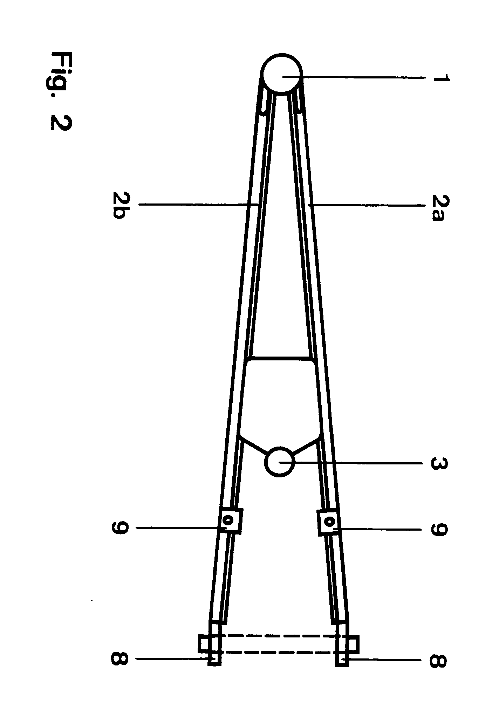

In Figur 2 ist das Lenkkopfrohr 1 an den Rahmenrohren 2a und 2b bündig angebracht und in der Spreizung der Rahmenrohre 2a und 2b ist das Sattelrohr 3 mit dem angeformten Kastenprofil angeordnet. Die Rahmenrohre schliessen mit den Ausfallenden 8 ab. Zwischen den Ausfallenden ist die Hinterachse strichpunktiert eingezeichnet. Die Sockel 9 für die Aufnahme von Kipphebelbremsen sind beispielhaft auf Laschen angebracht, die über die Rahmenrohre geschoben sind.

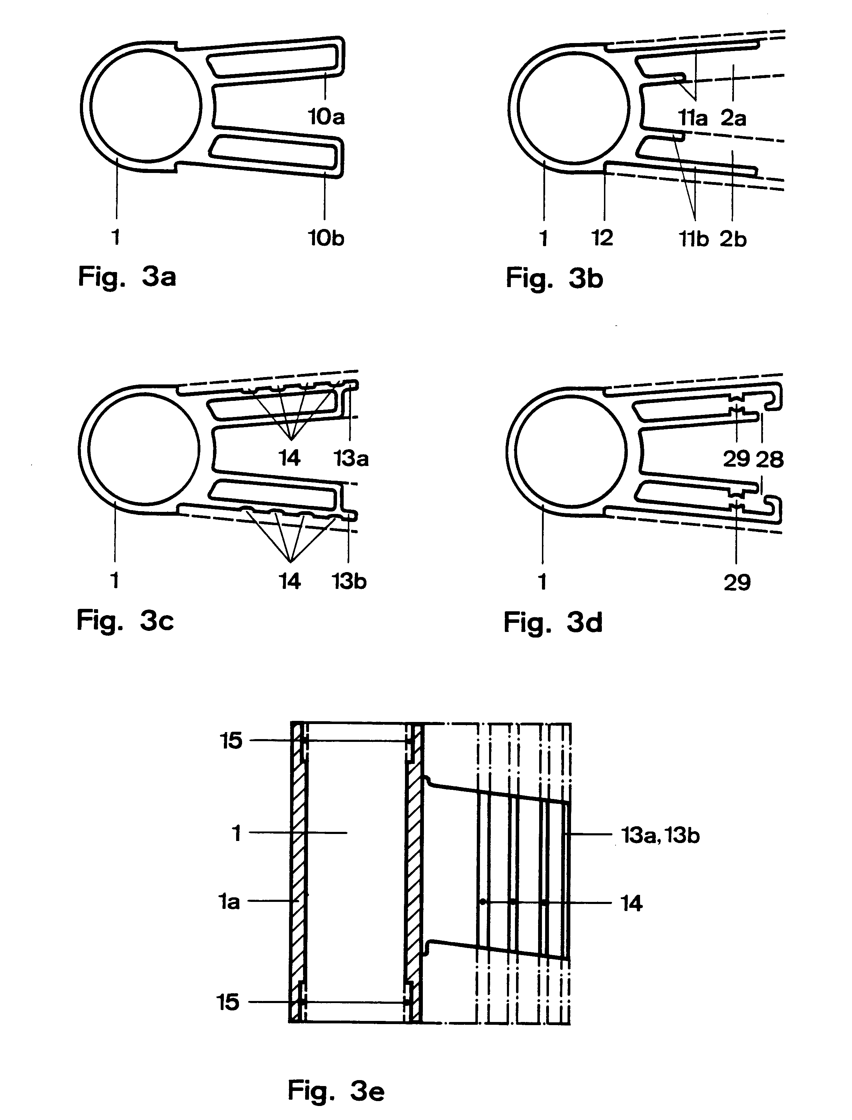

In den Figuren 3a, b, c und d sind Beispiele von stranggepressten Lenkkopfrohren 1 in der Draufsicht gezeigt.

In Figur 3a sind die hohlprofilartig geformten Fahnen 10a,b zur Aufnahme der Rahmenrohre gezeigt. Der Rohrteil einerseits nimmt die untere und obere Lagerschale des Steuersatzes (nicht eingezeichnet) auf, der seinerseits die Verbindung zum Vorradgabelschaft herstellt.

In Figur 3b sind anstelle der hohlprofilartigen Fahnen zwei Doppelfahnen 11a und 11b gezeigt. Stichpunktiert sind die Rahmenrohre 2a und 2b angedeutet. Im Bereich des Anschlusses der Rahmenrohre an das Lenkkopfrohr 12 ist die Materialdicke des Rohres reduziert, um einen glatten und bündigen Übergang zu schaffen.

In Figur 3c sind weitere hohlprofilartig geformte Fahnen 13a, 13b gezeigt. An den äusseren Seitenflächen der Fahnen 13a, 13b sind Rillen 14 vorhanden, die als Vorratsräume für den Klebstoff der die trennfeste Verbindung zwischen dem Lenkkopfrohr und dem Rahmenrohr schafft, dienen. Auch bei diesem Beispiel ist die Materialdicke des Rohres aussen teilweise reduziert, um einen glatten und bündigen Anschluss zu den Rahmenrohren zu schaffen. Ein solche Materialreduktion kann bei allen Ausführungsformen vorgesehen werden und ist nicht auf die angeführten Beispiele beschränkt.

In Figur 3d ist eine bevorzugte Ausführungsform von hohlprofilartig geformten Fahnen gezeigt. Die hohlprofilartig geformten Fahnen sind an ihrem hinteren Ende mit vertikalen Schlitzen 28 und im wesentlichen runden Führungen 29 versehen. Die Seitenwände der Fahnen sind dadurch spreizbar. Werden in die Führungen Schrauben oder insbesondere exzentrische Spreizkörper eingeführt und verdreht, wird die Fahne im Hohlraum des jeweiligen Rahmenrohres 2a oder 2b verspreizt und sicher gehalten. Eine Unterstützung der Spreizwirkung durch eine zusätzliche Klebeverbindung zwischen Fahne und Rahmenrohr ist ebenfalls möglich. Das Verdrehen der Schrauben oder Spreizkörper kann durch geeignete Werkzeuge, wie Schraubendreher, durch Ausnehmungen in Ober- und/oder Unterseite der Rahmenrohre erfolgen.

Figur 3e zeigt ein Beispiel eines Lenkkopfrohres in Seitenansicht, dessen Draufsicht etwa Figur 3c entnehmbar ist.

Das Rohrteil 1a weist gegenüber dem ursprünglichen Strangpressprofil eine mechanische Bearbeitung in Form einer teilweisen Ausweitung 15 des inneren Rohrquerschnittes auf. Durch diese Bearbeitung kann der innere Rohrquerschnitt den geforderten Weiten der Steuersätze angepasst werden. An den Fahnen 13a, 13b sind die Rillen 14 gezeigt. Die strichpunktierten Zeichnungsteile stellen die durch spanabhebende Bearbeitung des rohen Strangpressprofils entfernten Teile unter Ausbildung der Fahnen 13a, 13b dar. Die bearbeiteten Fahnen passen dann massgenau in die Hohlräume der Rahmenrohre.

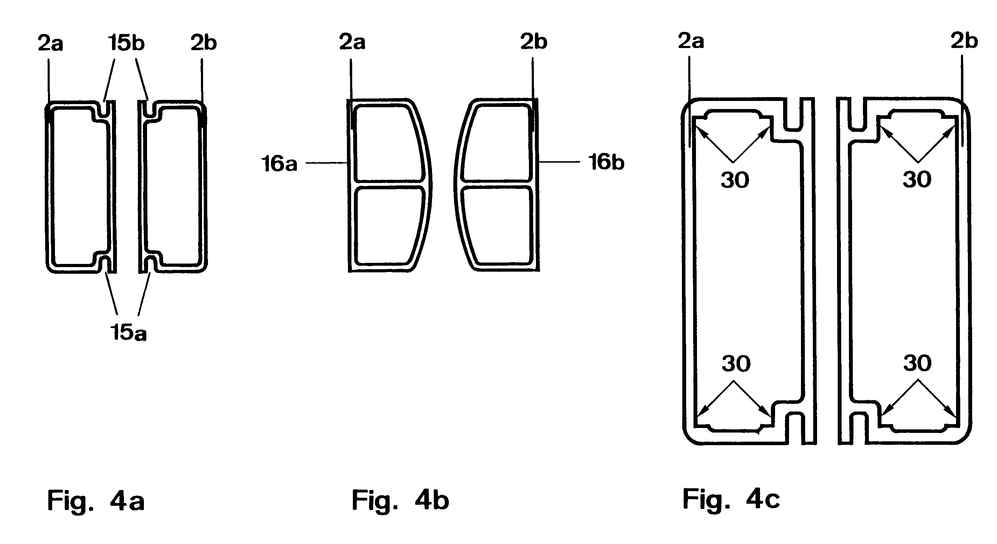

Die Figuren 4a, b und c zeigen Rahmenrohrpaare in verschiedenen Ausführungsformen. In Figur 4a sind rechteckförmige Rahmenrohre 2a,2b gezeigt, die eine untere 15a und obere 15b längslaufende Nut aufweisen. In diese Nuten können beispielsweise die Schienen oder Auskragungen 23 der Seitenflächen 20 der kastenförmigen Anformung des Sitzrohres 3 eingreifen und es können Laschen in diese Nuten 15a, 15b eingreifen.

Die in Figur 4b gezeigten Querschnitte beziehen sich auf Rahmenrohre 2a,2b, welche durch Ausnehmungen in den Stirnseiten des am Sitzrohr angeformten Kastenprofiles 17 durchgeschoben und über die Aussenflächen 16a, 16b z.B. mit Klebstoff innen an den Seitenflächen 20 des angeformten Kastenprofils 17 des Sitzrohres 3 befestigt werden.

In Figur 4c sind Rahmenrohre 2a,b gezeigt, deren Hohlraum derart ausgestaltet ist, dass die Fahnen des Lenkkopfrohres an den Flächen 30 auf welche die Pfeile deuten, berühren.

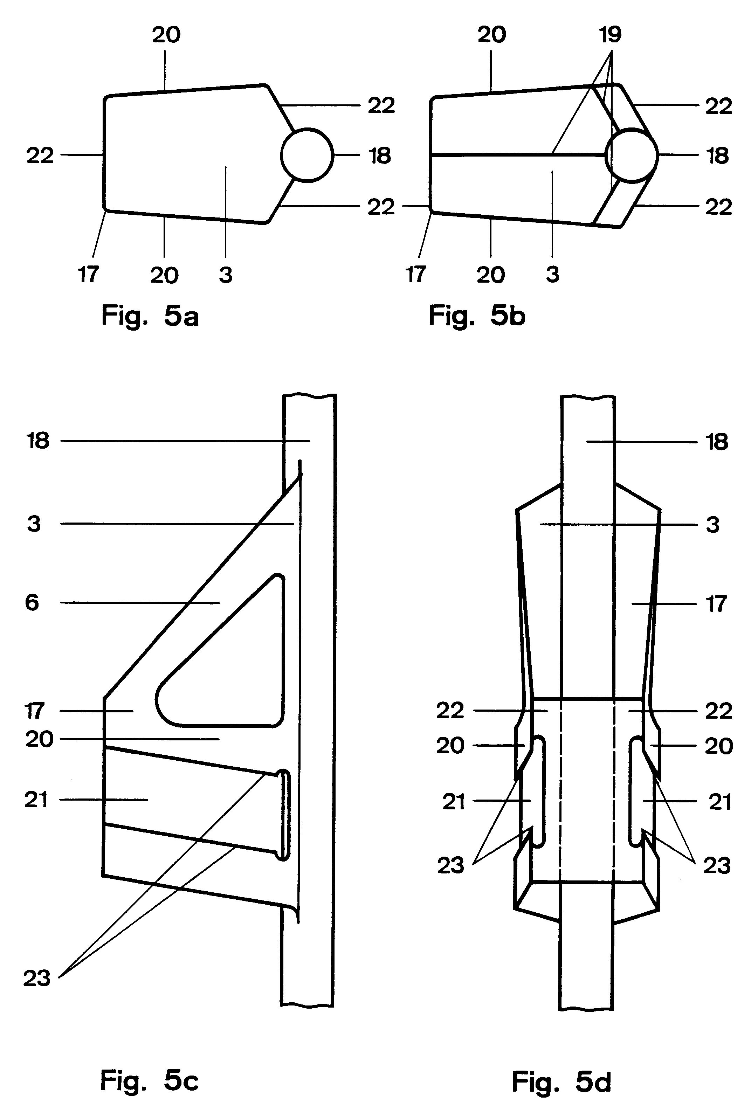

Das in Figur 5a in der Draufsicht gezeigten Sitzrohr 3 weist das Rohr 18 und ein angeformtes Kastenprofil 17 auf. Das Kastenprofil weist die Seitenflächen 20 und Stirnflächen 22 auf. Die Sattelstütze wird in das Rohr 18 eingeführt und mit einer Sattelklemme befestigt (nicht gezeigt).

In Figur 5b ist das Rohr 18 in das Kastenprofil 17 eingeformt und beispielhaft ist das Kastenprofil durch die Rippen 19 verstärkt. Es können längs-, diagonal- und/oder querstehende Rippen 19 vorgesehen werden. Solche Rippen 19 erstrecken sich bevorzugt vom Rohr 18 gegen die Seitenflächen 20, die vordere Stirnfläche 22 und/oder in die Ecke(n) zwischen vorderer Stirnfläche und Seitenfläche.

In Figur 5c und 5d ist ein Beispiel eines Sitzrohres 3 in Seitenansicht resp. von vorne dargestellt. Am Rohr 18 ist das Kastenprofil 17 angeformt und das Kastenprofil ist durch spanabhebende Bearbeitung am oberen Teil zu einem schräg nach vorne unten laufenden strebenförmigen Kastenteil 6 ausgestaltet worden. Im unteren Teil des Sitzrohres ist das Kastenprofil 17 unter Ausbildung einer leicht nach schräg unten laufenden Verstrebung entfernt worden. In den Seitenflächen 20 sind längslaufend Ausnehmungen 21 angebracht, die sich auch in die Stirnseiten 22 fortsetzen. Dabei bilden sich die Auskragungen 23, die ihrerseits in die Nuten 15a, 15b eines Rahmenrohrpaares greifen.

Figur 6 stellt die Seitenansicht eines Tretlagergehäuses 4 dar. Ein kastenförmiger Verbindungsteil 27 wird an der Stirnseite 25 mit der vorderen Stirnseite 22 des Kastenprofils 17 des Sitzrohres 3, z.B. über eine Schraubverbindung, verbunden. Das Tretlager wird in das rohrförmige Teil 24 eingesetzt. Das Rohr 18, Teil des Sitzrohres 3, ist strichpunktiert dargestellt. Das Rohr 18 wird durch eine Bohrung 26 von oben in das Tretlagergehäuse 4 eingeführt und fallweise trennfest verbunden. Wenigstens im Bereich in dem das Rohr 18 des Sitzrohres 3 in die Bohrung 26 eingeführt ist, muss das angeformte Kastenprofil 17 entfernt werden.

## Patentansprüche

1. Fahrradrahmen aus Aluminium oder Aluminiumlegierungen enthaltend ein Lenkkopfrohr, ein Rahmenrohr und ein Sitzrohr, dadurch gekennzeichnet, dass das Rahmenrohr ein Rahmenrohrpaar ist und dass das Lenkkopfrohr und/oder ein Rahmenrohrpaar und/oder das Tretlagergehäuse und/oder das Sitzrohr stranggepresste Profile sind.

2. Fahrradrahmen nach Anspruch 1, dadurch gekennzeichnet, dass wenigstens das Rahmenrohr und das Sitzrohr stranggepresste Profile sind.

3. Fahrradrahmen nach Anspruch 1, dadurch gekennzeichnet, dass das Rahmenrohr, das Sitzrohr und das Lenkkopfrohr stranggepresste Profile sind.

4. Fahrradrahmen nach Anspruch 1, dadurch gekennzeichnet, dass das Rahmenrohr, das Sitzrohr, das Tretlagergehäuse und das Sitzrohr strangepresste Profile sind.

5. Fahrradrahmen nach Anspruch 1, dadurch gekennzeichnet, dass das Lenkkopfrohr ein Rohrprofil mit zwei radial abstehenden, in spitzem Winkel zueinander stehenden, angeformten Fahnen darstellt oder dass das Lenkkopfrohr ein Rohrprofil, mit zwei tangential am Rohr angeformten Fahnen, die im wesentlichen parallel zueinander stehen, darstellt.

6. Fahrradrahmen nach Anspruch 1, dadurch gekennzeichnet, dass das Rahmenrohrpaar ein symmetrisches Kastenprofilpaar darstellt, wobei jedes Kastenprofil vorzugsweise einen rechteckigen Querschnitt aufweist.

7. Fahrradrahmen nach Anspruch 1, dadurch gekennzeichnet, dass das Sitzrohr ein Rohrprofil mit einem angeformten Kastenprofil oder ein Kastenprofil mit eingeformtem Sitzrohr ist.

8. Fahrradrahmen nach Anspruch 1, dadurch gekennzeichnet, dass das Rahmenrohrpaar auf den Schmalseiten an den inneren Ecken längslaufende Nuten aufweist und das Kastenprofil des Sitzrohres an den Seitenwänden des Kastenprofiles längslaufende Ausnehmungen und an gleicher Stelle an den Stirnwänden des Kastenprofiles Ausnehmungen aufweist, die in ihrer Form und Höhe dem innenrandseitigen Querschnitt der Rahmenrohre entsprechen, und die Ränder der längslaufenden Ausnehmungen Schienen oder Auskragungen bilden, welche in die längslaufenden Nuten der Rahmenrohre greifen und das Sitzrohr mit dem Rahmenrohrpaar verbinden.

9. Fahrradrahmen nach Anspruch 1, dadurch gekennzeichnet, dass das Lenkkopfrohr und das Rahmenrohrpaar und/oder das Rahmenrohrpaar und das Sitzrohr durch Kleben miteinander verbunden werden.
